Europäisches Patentamt

European Patent Office

Office européen des brevets

(11) Veröffentlichungsnummer: **0 213 269**

**A1**

(12) # EUROPÄISCHE PATENTANMELDUNG

(21) Anmeldenummer: 86104830.4

(22) Anmeldetag: 09.04.86

(51) Int. Cl.⁴: **G01F 23/00** , **G01F 23/14** , **G05D 9/04**

(30) Priorität: 19.08.85 ZA 856265

(43) Veröffentlichungstag der Anmeldung:
11.03.87 Patentblatt 87/11

(84) Benannte Vertragsstaaten:
AT BE CH DE FR GB IT LI NL SE

(71) Anmelder: WALTHER & CIE.
AKTIENGESELLSCHAFT
Waltherstrasse 51
D-5000 Köln 80 (Dellbrück)(DE)

(72) Erfinder: Becker, Rolf, Dipl.-Ing.
Uhlandstrasse 8
D-5250 Engelskirchen(DE)
Erfinder: Frank, Werner
Goldbornstrasse 92
D-5060 Bergisch-Gladbach 2(DE)

(54) **Materialstandüberwachungssystem.**

(57) Die vorliegende Erfindung betrifft ein Material-standüberwachungssystem für einen unter Unter-druck arbeitenden Staubabscheiderbunker mit einer Fühlereinrichtung die auf den Anstieg des Staubes im Bunker (12) über eine bestimmte Höhe (24) ans-pricht. Das System besitzt ein unten offenes Rohr - (22), das zunächst, vom vorgegebenen Materialstand ausgehend, im Bunker aufsteigt und sich von da nach außen bis zu einer Überwachungsstation (26) außerhalb und fern des Bunkers (12) erstreckt, die von einem begehbaren Niveau (20) aus leicht zugänglich ist und an der Überwachungsstation mit einem auf einen Druckanstieg innerhalb des Rohres ansprechenden Sensor (28) in Verbindung steht, der ein Signal beim Ansprechen des Sensors auslöst.

FIG.1

# MATERIALSTANDÜBERWACHUNGSSYSTEM

Die vorliegende Erfindung betrifft ein Materialstandüberwachungssystem für einen unter Unterdruck arbeitenden Staubabscheiderbunker mit einer Fühlereinrichtung die auf den Anstieg des Staubes im Bunker über eine bestimmte Höhe anspricht.

Staubabscheider, insbesondere elektrostatische Staubabscheider, Schlauchfilter und Schlauchbatterien, z.B. der in Rauchgassystemen von Kraftwerken verwendeten Art arbeiten üblicherweise unter Unterdruck wegen des Ansauggebläses, welches die zu behandelnden Rauchgase oder dergleichen durch die Entstaubungsanlage und in einen Schlot oder ähnliches Abgassystem hineinzieht. Der von solchen Abscheidersystemen aus den Rauchgasen abgeschiedene Staub fällt üblicherweise in einen oder mehrere Bunker, nomalerweise mit abgeschrägten, kegel-oder trichterförmigen Böden, die zu einer Austrittsöffnung hinführen, durch die der Staub ausgetragen wird. Wegen Brückenbildung, Verdichtung oder Klumpenbildung des Staubes oder aus anderen Gründen kommt es manchmal zu Verstopfungen der Austragsöffnung, der Staub sammelt sich im Bunker an und der Staubstand steigt. Dieser Anstieg des Staubes im Bunker ist bis zu gewissen Grenzen unschädlich. Überschreitet jedoch der Anstieg das zulässige Mass, müssen Gegenmassnahmen ergriffen werden, und deshalb müssen Staubstandüberwachungseinrichtungen vorgesehen werden, mittels welcher über beliebige, auf den Staubanstieg im Bunker über ein bestimmtes Mass hin ansprechende Fühlereinrichtungen, ein Warnsignal abgegeben wird. In grossen Kraftwerken sind die Bunker selbst oft viele Meter über Kopf angebracht, und der vorgegebene Stand bis zu welchem der Staubanstieg gestattet ist, ehe ein Signal abgegeben wird befindet sich üblicherweise mehrere Meter darüber. Bisher verwendete Materialstandfühlereinrichtungen waren beispielsweise elektrisch angetriebene im Bunkerinnern auf der vorgegebenen Höhe angebrachte Stimmgabeln, deren Schwingungen beim Untertauchen im Staub blockiert und dadurch über entsprechende elektronische Überwachungsmittel ein Signal augelöst wurde. Wegen Korrosion beziehungsweise Staubanhaftungsproblemen waren diese Stimmgabeln störanfällig und mussten häufig gewartet werden. Andere elektronische Sensoren , z.B. kapazitanzempfindliche, im Bunker angebrachte Sensoren hatten sonstige Nachteile. Es waren auch druckempfindliche an der Bunkerwand etwa auf der festgelegten Staubstandhöhe angebrachte Sensoren bekannt mit einem nach unten hin offenen, in das Bunkerinnere bis zum vorgegebenen Materialstand tauchenden Rohr. Auch diese bekannte Einrichtung erfordert regelmässige Reinigung und Wartung. Sämtliche der obengenannten, vorbekannten Überwachungseinrichtungen setzen das Vorhandensein sehr teurer Anlagen wie Treppenkonstruktionen und hochgelegener Wartungsrampen zur Ermöglichung des Zuganges zur Wartung des Überwachungssystems voraus.

Aus dem Obengesagten ergibt sich, dass die dem Stand der Technik zugeordneten und seit Jahrzehnten in der soeben beschriebenen Weise verwendeten Überwachungssysteme schwere Nachteile besassen.

Aufgabe der Erfindung ist es, diesem jahrzehntealten Übelstand Abhilfe zu verschaffen. Insbesondere wird eine Vorrichtung bezweckt, die eine zuverlässige und leicht zu handhabende Überwachung des Staubniveaus ermöglicht, die leicht zu warten ist und die nicht auf teure Treppen und Rampenanlagen angewiesen ist.

Hierzu verschafft die vorliegende Erfindung ein System der eingangs genannten Art, worin in an sich bekannter Weise ein unten offenes Rohr zunächst vom vorgegebenen Materialstand im Bunker ausgehend aufsteigt und sich von da nach aussen bis zu einer Überwachungsstation ausserhalb und fern des Bunkers erstreckt, die von einem begehbaren Niveau aus leicht zugänglich ist und an der Überwachungsstation mit einem auf einen Druckanstieg innerhalb des Rohres ansprechenden Sensor in Verbindung steht, der ein Signal beim Ansprechen des Sensors auslöst.

Falls sich die Bunker in unbequemer oder - schwer zugänglicher Lage oberhalb des Bodenniveaus befinden, ist die Überwachungsstation, z.B. an einem Ort angebracht, wo sie leicht vom Boden aus erreichbar ist, an und steigt das Rohr zunächst von der vorgegebenen Materialstandhöhe im Bunker aufwärts und führt von dort nach unten zur Überwachungsstation.

Der Sensor selbst kann eine an sich bekannte Konstruktion besitzen mit einer so ausgelegten Klappe, dass sie von einem Unterdruck im Rohr gegen eine Vorbelastung in Öffnungsrichtung geschlossen gehalten wird sowie mit einer Signaleinrichtung, die bei einer Öffnungsbewegung der Klappe anlässlich eines Druckanstieges im Rohr eine Signalabgabe verursacht.

Falls der Staubanstieg in mehr als einem Staubbunker überwacht werden soll oder falls unterschiedliche Staubhöhen im gleichen Bunker überwacht werden sollen, kann das System eine Anzahl von Rohren besitzen, die die jeweiligen Bunker beziehungsweise Bunkermessstellen mit ihren entsprechenden Sensoren einer gemeinsamen Überwachungsstation verbinden.

Vorzugsweise ist das Rohr mit einer ventilgesteuerten Verzweigung versehen, von der ein Zweig zum Sensor führt und der andere Zweig der Einführung vom Druckgas oder Druckluft zur Entstaubung des Rohres im Bedarfsfalle dient.

Die Erfindung erstreckt sich auch auf ein Verfahren zur Überwachung des Staubstandes, welches in einem Bunker einer Staubabscheideanlage, welches mit dem oben beschriebenen Materialstandüberwachungssystem durchgeführt wird.

Im Folgenden soll die Erfindung anhand eines Ausführungsbeispiel gemäss der beiliegenden Zeichnungen weiter erläutert werden. Darin stellen dar:

Figur 1 eine diagrammatische Ansicht eines Teiles einer Staubabscheideanlage worin die unteren Teile einer Anzahl, mit dem erfindungsgemässen Materialstandüberwachungssystem ausgerüsteter, Staubbunker dargestellt sind, und

Figur 2 zeigt in Teilschnitt eine Überwachungsstation mit einem Sensor als Teil eines erfindungsgemässen Systems.

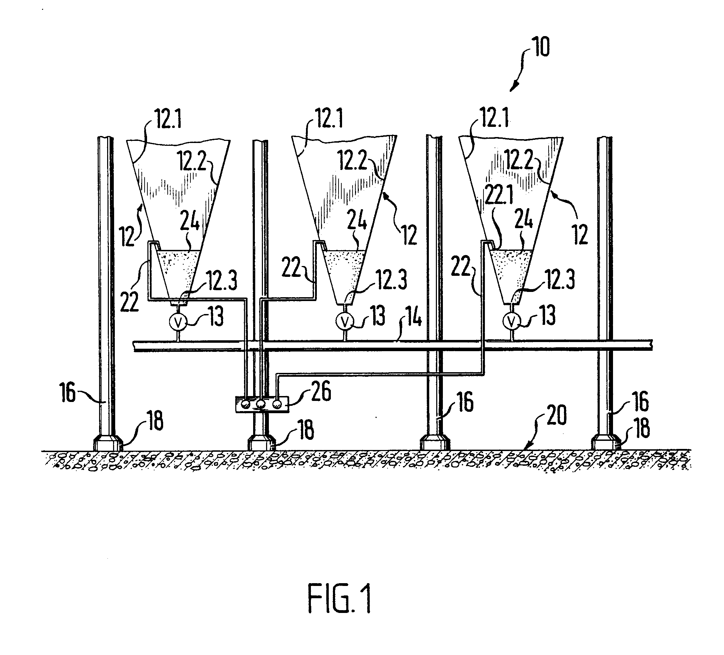

Gemäss Figur 1 bezeichnet die Ziffer 10 ganz allgemein Teil einer Staubabscheideranlage, im vorliegenden Fall eines elektrostatischer Staubabscheiders der Art wie er häufig in grossen Kohlekraftwerken zur Entfernung von Staub und Flugasche aus den Rauchgasen des Kraftwerkes verwendet wird.

Die Bunker 12, die den unteren Teil des elektrostatischen Abscheiders bilden, sammeln den Staub der aus den durchgeleiteten Gasen abgeschieden wird. Jeder dieser Bunker 12 besitzt einen trichterförmigen Boden mit geneigten Seitenwänden 12.1, 12.2, die dazu dienen, dass der sich darauf abgesetzte Staub zur Ausgangsöffnung 12.3 hinrutscht, die sich im unteren Ende jedes Bunkers 12 befindet. Jede der Austrittsöffnungen 12.3 der einzelnen Bunker 12 besitzt ein entsprechendes Ventil 13, welches sich auf ein Kettenrost, eine pneumatische Föderrinne oder sonstige geeignete Staubabfuhreinrichtung 14 zur Wegleitung des Staubes entlädt. Die Elektrofilter und ebenso die Bunker 12 werden von auf Fundamenten 18 auf ebener Erde 20 montierten Säulen 16 getragen.

Schon im Hinblick auf die Grösse der Anlage 10 und auch aus sonstigen Erwägungen befinden sich die Bunker 12 meistens hoch oberhalb der Bodenebene 20, häufig bis zu 15 Meter hoch. Ausserdem kann die Höhe, bis zur welcher der Staub ansteigen darf, sogar einige Meter höher sein.

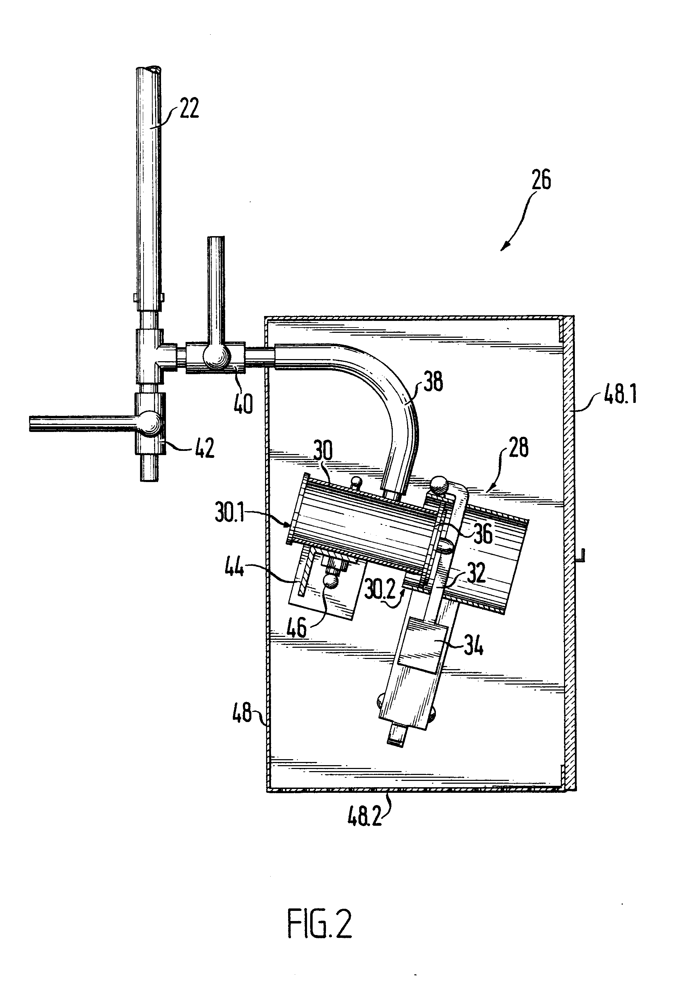

Gemäss Figur 1 besitzt eine Staubniveauüberwachungsanlage gemäss der Erfindung ein Rohr 22 von dem ein Ende 22.1 offen ist und bis zu einer bestimmten Höhe 24 im Inneren jedes Bunkers 12 ansteigt, zunächst nach oben und dann wieder abwärts bis zu einer Überwachungsstation 26 ausserhalb und unterhalb des Bunkers 12 und leicht zugänglich von einem begehbaren Niveau z.B. der Bodenhöhe 20. An der Überwachungsstation 26 steht das Rohr 22 mit einer Sensoreinrichtung 28 (siehe Figur 2) in Verbindung, die auf einen Druckanstieg im Rohr 22 anspricht.

Die Sensoreinrichtung 28 jeder Überwachungsstation 26 bestizt eine zylindrische Kammer 30 von der ein Ende 30.1 geschlossen ist, während das andere Ende mit einem an die Aussenseite der Kammer 30 oberhalb und neben dem Ende 30.2 angelehnten Arm 32 versehen ist. Das freie Ende des Armes 32 besitzt ein Gegengewicht 34.

Die Kammer 30 steht über einen Schlauch 38 und ein normalerweise offenes Verschlussventil 40 mit dem Rohr 22 in Verbindung. Das Rohr 22 besitzt auch einen weiteren Verschlusshahn 42 der normalerweise geschlossen bleibt und über den man das Rohr 22 an eine Druckluftquelle anschliessen kann, um dadurch das Rohr gelegentlich von darin angesammeltem Staub zu reinigen.

Die Kammer 30 ist über eine Halterung 44 und einen Bolzen 46 an der Innenseite eines Kastens 48 angebracht, und zwar so, dass der Winkel zwischen der Kammer 36 und der Waagerechten verstellbar ist.

Der Kasten 48 besitzt eine Glastür 48.1 an der Vorderseite sowie einen gelochten Boden 48.2.

Im Betrieb herrscht in den Bunkern 12 normalerweise ein leichter Unterdruck, verursacht vom natürlichen Zug des Rauchgasschlotes aber auch durch die Ansaugwirkung des Ansauggebläses des Kraftwerkkessels. Über das offene Ende 22.1 des Rohres 22 steht das Innere des Rohres 22 und somit die Kammer 30 mit dem Inneren des Bunkers 12 in Verbindung, wodurch der Druck in der Kammer 30 absinkt. Während das Staubniveau sich unterhalb des vorgegebenen Niveaus 24 befindet, wird das System durch andrücken der Klappe 36 gegen die Öffnung 30.2 aktiviert und bleibt die Klappe aufgrund des Unterdrucks in der Kammer 30 in dieser Position. Sollte das Staubniveau im Bunker über ein vorgegebenes Niveau 24 ansteigen, so steigt der Druck im Rohr 22, bis ein Stadium erreicht ist, bei welchem die Masse des Gegengewichtes 34 die Ansaugwirkung des nun verringerten Unterdruckes auf die Klappe 36 überschreitet. Der Arm 32 schwingt in seine offene Lage, und diese Bewegung dient zur Auslösung eines Signalgebers, z.B. eines Quecksilber-oder Microschalters (nicht abgebildet) zum Oeffnen oder Schliessen eines elektrischen Stromkreises. Dieser Vorgang kann seinerseits ein Warnsignal auslösen, beziehungsweise das Schieberventil 13 öffnen und damit Staub aus dem Bunker 12 auf das Kettenförderersystem 14 entleeren.

Obwohl im beschriebenen Ausführungsbeispiel die Überwachungsstation in einer Lage angebracht ist, wo sie möglichst bequem von Bodenhoehe 20 aus zugänglich ist, kann es auch gewisse Fälle geben, wo ein begehbarer Boden oder eine Rampe auf höherem Niveau bereits in angemessener Nähe zum Bunker 12 auf der gleichen oder einer anderen Höhe besteht. Unter solchen Umständen kann die Überwachungsstation 26 selbstverständlich auch in einer Lage angebracht werden, die von einem solchen Boden oder von solch einer Rampe aus bequem erreichbar ist.

**Ansprüche**

1. Die vorliegende Erfindung betrifft ein Materialstandüberwachungssystem für einen unter Unterdruck arbeitenden Staubabscheiderbunker mit einer Fühlereinrichtung die auf den Anstieg des Staubes im Bunker über eine bestimmte Höhe anspricht, dadurch gekennzeichnet, dass ein unten offenes Rohr (22) zunächst vom vorgegebenen Materialstand (24) ausgehend im Bunker (12) aufsteigt (22.1) und sich von da nach aussen bis zu einer Überwachungsstation (26) ausserhalb und fern des Bunkers erstreckt, die von einem begehbaren Niveau (20) aus leicht zugänglich ist und an der Überwachungsstation mit einem auf einen Druckanstieg innnerhalb des Rohres (22) ansprechenden Sensor (28) in Verbindung steht, der ein Signal beim Ansprechen des Sensors aulöst.

2. System gemäss Anspruch 1, dadurch gekennzeichnnet, dass sich die Bunker (12) in unbequemer oder schwer zugänglicher Lage oberhalb des Bodenniveaus (20) befinden und die Überwachungsstation (26) an einem Ort angebracht ist, wo sie leicht vom Boden aus erreichbar ist, und das Rohr (22) zunächst von der vorgegebenen Materialstandhöhe (24) im Bunker (12) aufsteigt und von dort nach unten zur Überwachungstation - (26) führt.

3. System gemäss Anspruch 1 oder 2, dadurch gekennzeichnet, dass der Sensor (28) eine an sich bekannte Konstruktion besitzt mit einer so ausgelegten Klappe (36), dass sie von einem Unterdruck im Rohr (22, 38) gegen eine Vorbelastung (34) in Öffnungsrichtung geschlossen gehalten wird, sowie mit einer Signaleinrichtung (z.B. Quecksilber-oder Microschalter) die bei einer Öffnungsbewegung der Klappe (36) anlässlich eines Druckanstieges im Rohr eine Signalabgabe verursacht.

4. System gemäss einem der Ansprüche 1 bis 3, dadurch gekennzeichnet, dass mehrere der Rohre (22) von unterschiedlichen Bunkern (12) zu zugeordneten Sensoren (28) einer gemeinsamen Überwachungstation (26) führen.

5. System gemäss einem der Ansprüche 1 bis 4, dadurch gekennzeichnet, dass das Rohr (22) jeweils mit einer ventilgesteuerten Verzweigung - (40, 42) versehen ist, von der ein Zweig (40, 38) zum Sensor (28) führt und der andere Zweig (42) der Einführung vom Druckgas oder Druckluft zur Entstaubung des Rohres (22) im Bedarfsfalle dient.

6. Elektrostatischer Staubabscheider, dadurch gekennzeichnet, dass er mit einem System gemäss einem der Ansprüche 1 bis 5 augerüstet ist.

7. Schlauchfilter, dadurch gekennzeichnet, dass er mit einem System gemäss einem der Ansprüche 1 bis 5 ausgerüstet ist.

8. Schlauchfilterkammer, dadurch gekennzeichnet, dass sie mit einem System gemäss einem der Ansprüche 1 bis 5 ausgerüstet ist.

9. Verwendung einer Vorrichtung gemäss einem der Ansprüche 1 bis 8 zur Fernüberwachung des Staubniveaus im Staubbunker einer Entstaubungsanlage.

FIG.1

FIG.2

# EUROPÄISCHER RECHERCHENBERICHT

| | EINSCHLÄGIGE DOKUMENTE | | EP 86104830.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | <u>DE - C - 866 255</u> (AKTIENGESELL-SCHAFT FÜR STICKSTOFFDÜNGER KNAPSACK)<br><br>* Seite 2, Zeilen 32-51; Patentanspruch 3; Abb. 1 * | 1,3 | G 01 F 23/00<br>G 01 F 23/14<br>G 05 D 9/04 |
| X | <u>DD - A - 8 068</u> (BERNAU)<br><br>* Seite 1, Zeilen 1-7; Patentanspruch 1; Abb. 6 * | 1,2,9 | |
| A | <u>GB - A - 864 841</u> (COAL INDUSTRY LIMITED)<br><br>* Ansprüche 1,5 * | 1,4 | |
| A | <u>DD - A - 59 403</u> (URBAN)<br><br>* Patentanspruch 1; Fig. * | 1,3 | |
| A | <u>DE - C - 841 954</u> (CLAUDIUS PETERS AKTIENGESELLSCHAFT)<br><br>* Patentanspruch 1; Fig. * | | G 01 F 23/00<br>G 01 D 9/00 |
| A | <u>DE - C - 947 646</u> (DEUTSCHE BABCOCK & WILCOX DAMPFKESSEL-WERKE AKTIEN-GESELLSCHAFT)<br><br>* Patentanspruch 1; Fig. * | | |
| A | <u>DD - A - 14 075</u> (SCHLENDER)<br><br>* Patentanspruch; Fig. * | | |

RECHERCHIERTE SACHGEBIETE (Int. Cl. 4)

Der vorliegende Recherchenbericht wurde für alle Patentansprüche erstellt.

| Recherchenort | Abschlußdatum der Recherche | Prüfer |
|---|---|---|
| WIEN | 28-11-1986 | STÖGER |

| | EINSCHLÄGIGE DOKUMENTE | | EP 86104830.4 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
| A | DD - A - 64 155 (QUILITZSCH)<br>* Patentanspruch 1; Fig. *<br>-- | | |
| A | US - A - 2 331 208 (LUDI)<br>* Fig. *<br>-- | | |
| A | US - A - 2 846 879 (KAUFFMAN)<br>* Fig. 1 *<br>---- | | |
| | | | RECHERCHIERTE SACHGEBIETE (Int. Cl. 4) |

Der vorliegende Recherchenbericht wurde für alle Patentansprüche erstellt.

| Recherchenort | Abschlußdatum der Recherche | Prüfer |
|---|---|---|
| WIEN | 28-11-1986 | STÖGER |